# EUROPÄISCHE PATENTSCHRIFT

(11) **EP 2 156 495 B1**
(45) Veröffentlichungstag und Bekanntmachung des Hinweises auf die Patenterteilung: **13.03.2013**
(21) Anmeldenummer: 08773253.3
(22) Anmeldetag: 13.05.2008
(51) Int. Cl.: H01M 8/02

(54) **WIEDERHOLEINHEIT FÜR EINEN BRENNSTOFFZELLENSTAPEL**
REPEATER UNIT FOR A FUEL CELL STACK
UNITÉ RÉCURRENTE POUR EMPILEMENT DE PILES À COMBUSTIBLE

(30) Priorität: 11.06.2007 DE 102007026850; 16.07.2007 DE 102007033042
(43) Veröffentlichungstag der Anmeldung: 24.02.2010
(73) Patentinhaber: Staxera GmbH, 01237 Dresden (DE)
(72) Erfinder: REINERT, Andreas, 01277 Dresden (DE)
(74) Vertreter: Schumacher, Dirk
(86) Internationale Anmeldenummer: PCT/DE2008/000820
(87) Internationale Veröffentlichungsnummer: WO 2008/151591

(56) Entgegenhaltungen:
- EP-A- 1 653 543
- WO-A-2008/040835
- WO-A1-2006/040994
- WO-A2-02/069426
- JP-A- 2007 207 731
- US-A1- 2003 064 266
- US-A1- 2004 115 513
- US-A1- 2006 054 221
- US-A1- 2007 009 779
- US-A1- 2007 160 894

## Beschreibung

Die Erfindung betrifft eine Wiederholeinheit für einen Brennstoffzellenstapel, mit einer Membranelektrodeneinheit und einem Flow-Field, das ausgelegt ist, eine aktive Fläche der Membranelektrodeneinheit mit Gas zu versorgen, und das zumindest eine erste Gasdurchtrittöffnung aufweist.

Brennstoffzellen dienen, ähnlich wie Batterien, der direkten Umwandlung von chemischer Energie in elektrische Energie. Das Kernstück einer Brennstoffzelle ist die Membranelektrodeneinheit (MEA, Membrane Electrode Assembly), die aus einer Anodenschicht, einer Kathodenschicht sowie einer die Anodenschicht von der Kathodenschicht trennende Elektrolytmembran besteht. Zur Stromerzeugung wird der Anodenschicht Brenngas, beispielsweise Wasserstoff, zugeführt, während der Kathodenschicht Oxidationsgas, beispielsweise Luft, zugeführt wird. Dabei kommt es zu einer Oxidation von Brenngas an der Anode, wobei die vom Brenngas abgegebenen Elektronen über eine elektrisch leitende Verbindung von der Anode zur Kathode wandern, wo sie das Oxidationsgas reduzieren. Die dabei entstehenden negativen Oxidationsgasionen kombinieren mit den positiv geladenen Brenngasionen. Wird beispielsweise als Brenngas Wasserstoff H₂ und als Oxidationsgas Sauerstoff O₂ verwendet, so kombinieren im Falle einer Festoxidbrennstoffzelle (SOFC, Solid Oxide Fuel Cell) Sauerstoffionen O²⁻ in und an der Anodenschicht mit Wasserstoffionen H⁺ zu Wassermolekülen H₂O. Die dabei freigesetzte Energie kann genutzt werden, indem zwischen die Anode und die Kathode eine Verbraucherlast geschaltet wird.

Der Teil der Anodenoberfläche beziehungsweise der Kathodenoberfläche, in dem Brenngas beziehungsweise Oxidationsgas absorbiert wird, wird im Folgenden die "aktive Fläche" genannt.

Da eine einzelne Brennstoffzelle nur eine geringe elektrische Spannung (typischerweise zwischen 0.1 V und 1 V) zur Verfügung stellt, ist es üblich, viele Brennstoffzellen in Form eines Brennstoffzellenstapels (Brennstoffzellenstack) elektrisch hintereinander zu schalten, so dass sich die Spannungen der einzelnen Brennstoffzellen des Stapels addieren. Dabei wird jeweils die Kathodenschicht einer Brennstoffzelle mit der Anodenschicht der angrenzenden Brennstoffzelle über eine Bipolarplatte verbunden. Innerhalb der Bipolarplatte oder benachbart zur Bipolarplatte befinden sich ein Flow-Field zum Verteilen von Brenngas und von Oxidationsgas an zwei angrenzende Brennstoffzellen. Der Brennstoffzellenstapel umfasst somit mehrere identische Wiederholeinheiten, wobei jede Wiederholeinheit eine Membranelektrolyteinheit (MEA) und eine Bipolarplatte umfasst, die vorzugsweise zwei Flow-Fields bildet oder begrenzt.

Der Stand der Technik kennt verschiedene Ausführungsformen von Flow-Fields, mit denen eine möglichst gleichförmige Gasversorgung der gesamten aktiven Fläche und eine optimale Druck- und Temperaturverteilung im Brennstoffzellenstapel gewährleistet werden soll.

Eine gute Gleichverteilung des Gases an der Elektrodenfläche jeder Brennstoffzelle des Brennstoffzellenstapels und innerhalb des Stapels kann durch verschiedene Mittel unterstützt werden, zum Beispiel:
- Verwenden einer Engstelle zum Erzeugen eines Staudrucks, vergleichbar mit einem Duschkopf. Dies hat jedoch den Nachteil eines erhöhten Druckverlustes und damit eines erhöhten Nebenverbrauchs des Brennstoffzellenstapels, da die zum Betrieb erforderliche Gebläseleistung proportional zum Druckverlust ist.
- Anordnung sehr vieler Eintrittöffnungen, wodurch der Eintrittbereich (Verteilungsbereich) stromaufwärts verlagert wird.
- Einleiten des Gases durch einen Diffusor, der das durch ihn strömende Gas allmählich aufweitet.

Das Einbringen einer Engstelle zum Erzeugen eines Staudrucks ist bei einem Festoxid-Brennstoffzellenstapel (SOFC-Stack) nur schwer zu realisieren. Eine Engstelle müsste äußerst präzise gearbeitet sein, da schon geringe Abweichungen ihres Querschnitts zu großen Unterschieden im Druckverlust und damit in der Verteilung des Gases führen können. Desweiteren ist ein hoher Druckverlust an einer Brennstoffzelle, wie oben erwähnt, wegen der erhöhten erforderlichen Gebläseleistung unerwünscht.

Bei den gattungsgemäßen Wiederholeinheiten strömt das Gas zur Versorgung der (hier als horizontal liegend angenommenen) aktiven Fläche aus kreisförmigen Gasdurchtrittsöffnungen neben der Elektrodenschicht zunächst vertikal in den Bereich neben dem aktiven Teil der Elektrodenschicht, um dann in horizontaler Richtung an der aktiven Fläche entlang zu strömen und anschließend in vertikaler Richtung durch weitere kreisförmige Gasdurchtrittsöffnungen neben der Elektrodenschicht abgeleitet zu werden. Dabei strömt das Gas ohne Umweg auf direktem Weg von den Eintrittöffnungen zu den Austrittöffnungen, was den Nachteil birgt, dass es zu einem sogenannten Gaskurzschluss zwischen einer Eintrittöffnung und der gegenüberliegenden Austrittöffnung kommen kann, d.h., dass Gas zumindest teilweise unverbraucht von der Eintritt- zur Austrittöffnung strömt, ohne dass ein signifikanter Teil des Gases von der aktiven Fläche aufgenommen wird. Um solche Gaskurzschlüsse zu vermeiden, wurde bereits in Erwägung gezogen, sehr viele Eintritt- und Austrittöffnungen neben der aktiven Fläche und eine entsprechend große Dichtfläche vorzusehen, was jedoch ein erhöhtes Ausfallrisiko mit sich bringt.

Um eine möglichst gleichmäßige Temperaturverteilung im Brennstoffzellenstapel zu erzeugen, kann die sogenannte Gegen- und Gleichstromanordnung verwendet werden. Dabei strömt das Brenngas/Oxidationsgas in einer Brennstoffzelle in im Vergleich zur Nachbarzelle umgekehrter Richtung an der Anoden/Kathodenschicht entlang. Hierfür müssen die Zuführungen und die Abführungen für das Oxidationsgas in den gleichen Bereichen angeordnet sein wie die Zuführungen und die Abführungen für das Brenngas, was nicht einfach umzusetzen ist, insbesondere wenn zur gleichmäßigen Verteilung des Gases sehr viele Ein- und Austrittöffnungen notwendig sind.

Ein weiteres Problem stellt die gleichmäßige Gasverteilung auf alle (typischerweise 30 oder 60) Ebenen des Stapels dar. Berechnungen zufolge ist die Gasverteilung bei identischem Querschnitt von Eintritt- und Austrittöffnung nicht optimal; beispielsweise kann der Fall auftreten, dass die unteren Ebenen des Stapels besser als die oberen Ebenen mit Gas versorgt werden. Dies wiederum führt zu einer schlechten Brenngasausnutzung und damit zu einem schlechten Wirkungsgrad des Brennstoffzellenstapels.

Der Erfindung liegt die Aufgabe zugrunde, eine Wiederholeinheit für einen Brennstoffzellenstapel zu schaffen, die eine besonders gleichmäßige Gasverteilung über die aktive Fläche sowie über den gesamten Brennstoffzellenstapel ermöglicht.

Diese Aufgabe wird mit den Merkmalen des Anspruchs 1 gelöst.

Vorteilhaft Ausgestaltungen und Weiterbildungen der Erfindung ergeben sich aus den abhängigen Ansprüchen.

Die erfindungsgemäße Wiederholeinheit baut auf dem gattungsgemäßen Stand der Technik dadurch auf, dass zwischen der aktiven Fläche und der Gasdurchtrittöffnung eine gasdichte Gasströmungsbarriere angeordnet ist, so dass Gas, das durch die Gasdurchtrittöffnung tritt, die Gasströmungsbarriere umströmt, wobei die Projektion der Gasströmungsbarriere auf den Rand der aktiven Fläche mindestens halb so lang (neben dem Faktor 0,5 werden auch die Faktoren 0,75, 1 und 1,25 bevorzugt) wie die Projektion der Gasdurchtrittöffnung auf den Rand der aktiven Fläche ist. Der Erfindung liegt die Erkenntnis zugrunde, dass Gaskurzschlüsse vermieden werden können, indem das zugeführte Gas mittels einer derartigen Barriere gehindert wird, direkt von einer Eingangsöffnung zu einer Ausgangsöffnung zu strömen. Die Barriere bewirkt, dass das eintretende Gas zunächst in Richtung einer äußeren Umrandung der Brennstoffzelle strömt, um dann von der Umrandung und der Barriere zum aktiven Bereich umgelenkt zu werden. Eine besonders breite Barriere, das heißt, eine Barriere mit im Vergleich zur Eintrittöffnung großer Projektion auf den Rand der aktiven Fläche, bewirkt dabei einen besonders sicheren Schutz gegen Gaskurzschlüsse. Die Gasströmungsbarriere kann beispielsweise durch einen sogenannten eingelegten Spacer realisiert sein. Sie kann aber beispielsweise auch durch eine entsprechende Prägung der Flowfieldplatte erzielt werden.

Als besonders vorteilhaft wird erachtet, dass sich die Gasströmungsbarriere in Richtung zur aktiven Fläche verjüngt. Hierdurch wird eine besonders gleichmäßige Gasverteilung auf dem Rand der aktiven Fläche ermöglicht. Insbesondere wird eine gute Gasversorgung auch des im "Schatten" der Gasströmungsbarriere liegenden Bereiches der aktiven Fläche gewährleistet.

In diesem Zusammenhang ist es vorteilhaft, dass die Gasströmungsbarriere im wesentlichen die Form und Ausrichtung eines "V" oder "U" hat, dessen Öffnung der aktiven Fläche abgewandt ist. Eine sich U- oder V-förmig verjüngende Barriere ist spiegelsymmetrisch und kann daher zumindest annähernd symmetrisch vom Gas umströmt werden.

Es kann weiter vorteilhaft sein, dass sich die Gasdurchtrittöffnung in Richtung zur aktiven Fläche verjüngt. Insbesondere in Kombination mit einer sich verjüngenden Gasströmungsbarriere wird so der durch die Gasdurchtrittöffnung hindurchtretende Gasstrom stetig aufgeweitet beziehungsweise (je nach Strömungsrichtung) verengt.

Bei einer besonders bevorzugten Ausführungsform wird eine Verjüngung der Gasdurchtrittöffnung in Richtung zur aktiven Fläche dadurch erreicht, dass die Gasdurchtrittöffnung im wesentlichen die Form eines Dreiecks mit abgerundeten Ecken hat. Diese Form ist geometrisch besonders einfach.

Besonders nützlich ist, dass die beschriebene Gasdurchtrittöffnung zum Zuführen von Gas an die aktive Fläche ausgelegt ist und das Flow-Field eine zweite Gasdurchtrittöffnung zum Abführen von Gas von der aktiven Fläche aufweist, wobei zwischen der aktiven Fläche und der zweiten Gasdurchtrittöffnung eine gasdichte zweite Gasströmungsbarriere vorgesehen ist, so dass Gas, das durch die zweite Gasdurchtrittöffnung tritt und zumindest über einen Teil der aktiven Fläche geströmt ist, die zweite Gasströmungsbarriere umströmt, wobei die Projektion der zweiten Gasströmungsbarriere auf den Rand der aktiven Fläche mindestens halb so lang wie die Projektion der zweiten Gasdurchtrittöffnung auf den Rand der aktiven Fläche ist. Hierdurch wird eine Ausführungsform realisiert, bei das Flow-Field sowohl im Hinblick auf die Zuleitung als auch auf die Ableitung des Gases von der aktiven Fläche erfindungsgemäß gestaltet ist, wodurch sich die bereits erläuterten Vorteile der Erfindung sowohl für die Zuleitung als auch für die Ableitung nützlich auswirken.

Dabei ist es erstrebenswert, dass die zum Abführen des Gases vorgesehene zweite Gasdurchtrittöffnung eine größere Querschnittsfläche als die zum Zuführen des Gases vorgesehene erste Gasdurchtrittöffnung hat. Strömungsmechanischen Berechnungen zufolge ergibt sich dadurch eine bessere Druckverteilung im gesamten Brennstoffzellenstapel.

Eine besonders bevorzugte Ausführungsform der erfindungsgemäßen Wiederholeinheit ist dadurch ausgezeichnet, dass die aktive Fläche im Wesentlichen rechteckig ist und in einen oder mehrere im Wesentlichen rechteckige Versorgungsbereiche aufgeteilt ist, wobei jedem Versorgungsbereich eine erste Gasdurchtrittöffnung zum Zuführen von Gas und eine zweite Gasdurchtrittöffnung zum Abführen von Gas zugeordnet sind. Auf diese Weise werden mehrere erfindungsgemäße Gasdurchtrittöffnungen und zugehörige Gasströmungsbarrieren in vorteilhafter zu einem gröberen Flow-Field kombiniert. Die rechteckige Aufteilung erlaubt auf besonders einfache Weise eine gleichmäßige Gasversorgung der gesamte aktiven Fläche.

In diesem zusammenhang ist es nützlich, dass die erste Gasdurchtrittöffnung und die zweite Gasdurchtrittöffnung auf einer Mittelachse des ihnen zugeordneten Versorgungsbereiches angeordnet sind, da diese Anordung geometrisch besonders einfach ist und das Gas nach Umströmen der ersten Gasströmungsbarriere in im Wesentlichen gerader Richtung auf eine entsprechende Gaströmungsbarriere auf der entgegengesetzten Seite der Brennstoffzelle geführt wird und eventuelle Störeffekte, etwa durch sich turbulent mischende Teilströmungen, vermieden werden.

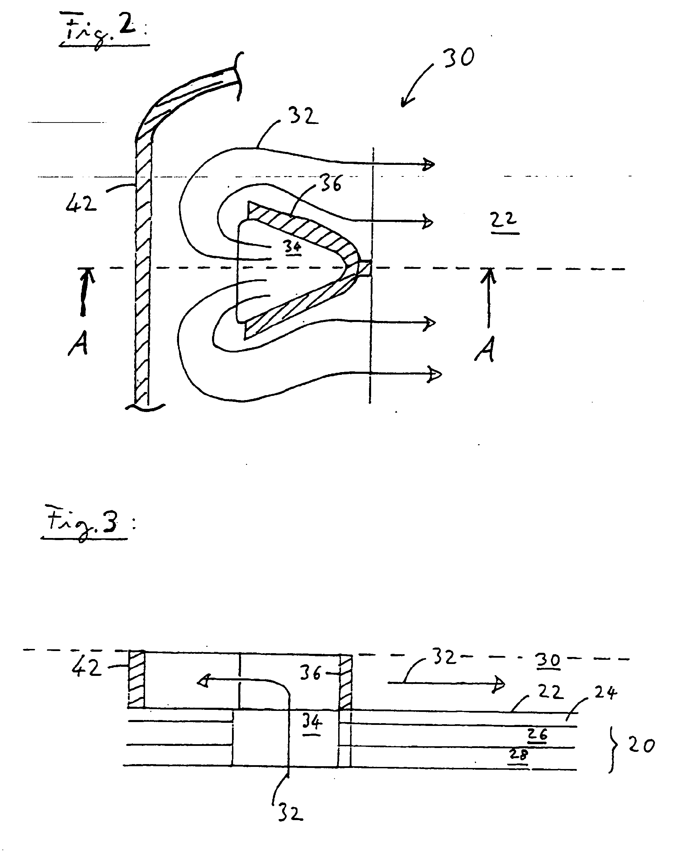

Bei der bevorzugten Ausführungsform der erfindungsgemäßten Wiederholeinheit ist die äußere Umrandung des Flow-Fields stromlinienförmig ausgelegt, zum Beispiel wie in Figur 3 dargestellt. Hierdurch wird eine möglichst laminare Strömung auch im äußeren Randbereich des Flow-Fields gewährleistet.

Die Erfindung wird nun mit Bezug auf die begleitenden Zeichnungen anhand besonders bevorzugter Ausführungsformen beispielhaft erläutert.

Es zeigen:
- Figuren 1a, 1b: jeweils eine schematische Draufsicht auf zwei ähnliche Flow-Fields, die dem Stand der Technik entsprechen;
- Figur 2: eine schematische Draufsicht auf einen Teilbereich eines Flow-Fields gemäß einer bevorzugten Ausführungsform der Erfindung, Figur 3 mit einer Gasdurchtrittöffnung; einen schematischen Querschnitt des in Figur 2 gezeigten Teilbereiches entlang der Schnittlinie A-A;
- Figur 4: die Projektion einer Gasdurchtrittöffnung und die Projektion der zugehörigen Gasströmungsbarriere auf den Rand des aktiven Bereichs;
- Figur 5: eine schematische Draufsicht auf ein im wesentlichen rechteckiges Flow-Field gemäß einer bevorzugten Ausführungsform der Erfindung, mit zwei Gasdurchtrittöffnungen; und
- Figur 6: eine schematische Schnittansicht des in Figur 4 gezeigten Flow-Field.

In den Figuren bezeichnen gleiche oder ähnliche Bezugszeichen (zum Beispiel um einen Betrag von 100 versetzte Bezugszeichen) gleiche oder ähnliche Komponenten, die zur Vermeidung von Wiederholungen zumindest-teilweise nur einmal erläutert werden.

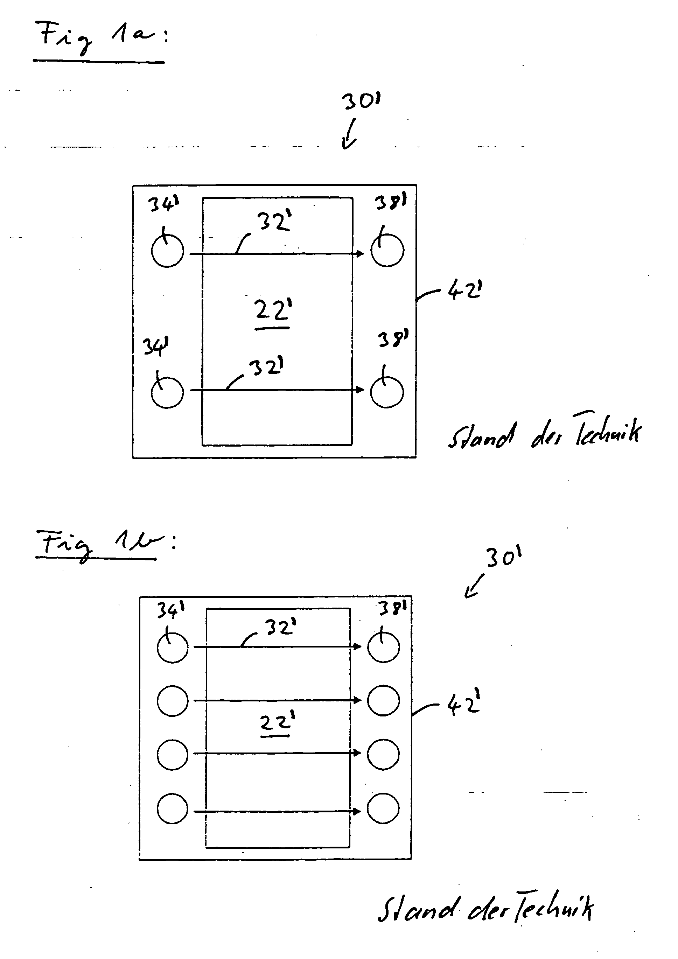

Figur 1a illustriert ein Flow-Field 30' einer Brennstoffzelle des Standes der Technik. Auf zwei gegenüberliegenden Seiten einer rechteckigen aktiven Fläche 22' (hier als horizontal angenommen) sind je zwei erste Gasdurchtrittöffnungen 34' zum Einleiten von Gas 32' und je zwei zweite Gasdurchtrittöffnungen 38' zum Ableiten von Gas 32' angeordnet, so dass bei normalem Betrieb der Brennstoffzelle das Gas zunächst in vertikaler Richtung aus den ersten Gasdurchtrittöffnungen *34' tritt, dann horizontal über die aktive Fläche 32' strömt (wobei sich die Zusammensetzung des Gases 32' im allgemeinen durch Absorbtion und Mischung mit von der aktiven Fläche abgeschiedenem Gas verändert) und schließlich in vertikaler Richtung durch die zweiten Gasdurchtrittöffnungen 34' abgeleitet wird. Bei der dargestellten Anordnung ist der gegenseitige Abstand zwischen den beiden ersten Gasdurchtrittöffnungen groß im Vergleich zu ihren Durchmessern, woraus eine unbefriedigende Gasverteilung resultiert, verbunden mit dem Risiko eines durch die Pfeile veranschaulichten Gaskurzschlusses zwischen einer ersten Gasdurchtrittöffnung 34' und der gegenüberliegenden zweiten Gasdurchtrittöffnung 38'.

Um eine möglichst gleichförmige Gasverteilung über der gesamten aktiven Fläche 22' zu erreichen, können die Gasdurchtrittöffnungen in relativ kurzen gegenseitigen Abständen angeordnet sein. Eine entsprechende Geometrie mit insgesamt vier Gasdurchtrittöffnungen 34', 38' zu jeder Seite der aktiven Fläche 22' ist in Figur 1b skizziert.

Die in Figur 1a und in Figur 1b dargestellten Gasdurchtrittöffnungen 34', 38' zum Zuleiten und zum Ableiten von Gas haben desweiteren den gleichen Querschnitt.

Figur 2 ist ein horizontaler Schnitt entlang der durchbrochenen Linie in Figur 3 durch einen Teilbereich eines Flow-Field 30 mit einer äußeren Umrandung 42 und einer Gasdurchtrittöffnung 34 zum Zuführen von Gas an eine aktive Fläche 22. Die Gasdurchtrittöffnung 34 und die aktive Fläche 22 liegen in einer gemeinsamen horizontalen Ebene. Die Kontur der Gasdurchtrittöffnung 34 ist im Wesentlichen die eines gleichschenkligen Dreiecks mit abgerundeten Ecken. Das gleichschenklige Dreieck ist dabei so ausgerichtet, dass seine ausgezeichnete Ecke zur aktiven Fläche 22 weist. Entlang der beiden gleich langen Schenkel des Dreiecks verläuft eine vertikale, das heißt, senkrecht auf der von der Gasdurchtrittöffnung 34 definierten Ebene stehende, mauerförmige Gasströmungsbarriere 36, deren Projektion in Richtung auf den aktiven Bereich 22 etwas mehr als die Projektion der Gasdurchtrittöffnung 34 in Richtung auf den aktiven Bereich 22 misst. Von unten durch die Gasdurchtrittöffnung 34 in das Flow Field 30 einströmendes Gas 32 wird durch die Gasströmungsbarriere 36 gehindert, direkt auf die aktive Fläche 28 zu strömen. Die Gasströmungsbarriere 36 bewirkt, dass das Gas 30 zunächst in Richtung einer Umrandung 42 strömt. Die Umrandung 42 wiederum bewirkt, dass das Gas 32 die Gasströmungsbarriere 36 entlang ihrer beider Schenkel umströmt, um zur aktiven Fläche 22 zu gelangen. Die dreieckige Form und die Ausrichtung der Gasdurchtrittöffnung 34 sowie die Form der sich teilweise an die Kontur der Gasdurchtrittöffnung 34 anschmiegenden Gasströmungsbarriere 36 bewirken, dass nur ein schmaler Teil der Gasströmungsbarriere 36 die aktive Fläche 22 versperrt. Man bemerkt, dass der versperrte Randabschnitt der aktiven Fläche 22 klein ist im Vergleich zur Projektion der Gasdurchtrittöffnung 34 auf den Rand der aktiven Fläche 22. Abgesehen von dem kurzen versperrten Randabschnitt kann das Gas 30 in den aktiven Abschnitt auf dem gesamten Rand eintreten, so dass praktisch die gesamte aktive Fläche 22 mit Gas 32 versorgt werden kann.

Figur 3 ist ein Querschnitt durch die in A-A 2 gezeigte Anordnung, entlang der durchbrochenen Linie in Figur 2. Die aktive Fläche 22 ist die Oberfläche einer Anodenschicht 24. Die Anodenschicht 24 wird von einer Kathodenschicht 28 durch eine Elektrolytmembran 26 getrennt. Die Anodenschicht 24, die Elektrolytmembran 26 und die Kathodenschicht 28 bilden zusammen die Membranelektrodeneinheit (MEA) 20. Neben der MEA befindet sich die Gasdurchtrittöffnung 34, durch die das einströmende Gas 32 in das Flow-Field 30 gelangt, wo es nach Umströmen (außerhalb der Schnittebene) der Gasströmungsbarriere 36 auf die aktive Fläche 22 trifft.

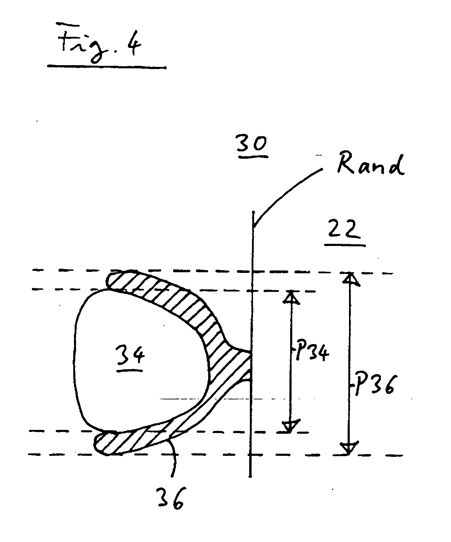

Figur 4 erläutert die Gasdurchtrittöffnung 34 und ihre Projektion P34 auf den Rand des aktiven Bereichs 22, sowie die Gasströmungsbarriere 36 und ihre Projektion P36 auf den Rand des aktiven Bereichs 22. Erfindungsgemäß ist die Projektion P36 der Gasströmungsbarriere 36 mindestens halb so lang wie die Projektion P34 der Gasdurchtrittöffnung 34. In der dargestellten Ausführungsform ist die Projektion P36 der Gasströmungsbarriere 36 sogar länger als die Projektion P34 der Gasdurchtrittöffnung 34.

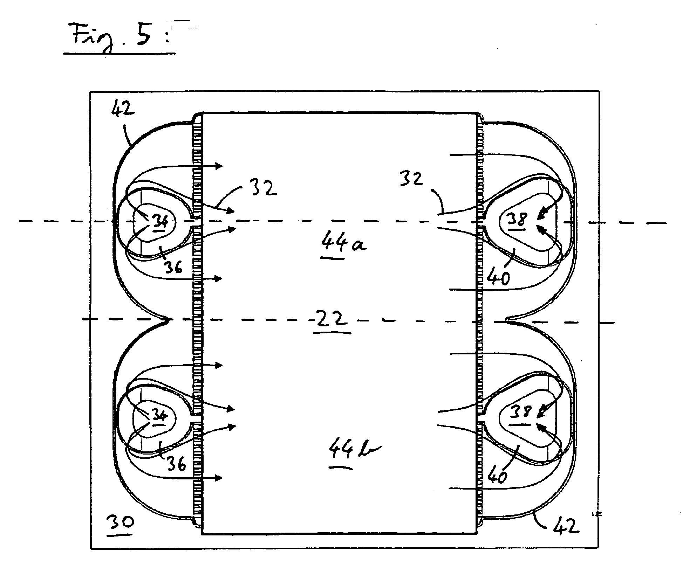

Figur 5 ist eine Draufsicht auf ein Flow-Field 30 eines Brennstoffzellenstapels in einer besonders bevorzugten Ausführungsform. Eine rechteckige aktive Fläche 22 ist in zwei identische Versorgungsbereiche 44a und 44b aufgeteilt, denen jeweils eine Gasdurchtrittöffnung 34 zum Einleiten eines Gases 32 und eine Gasdurchtrittöffnung 38 zum Ableiten des Gases 32 zugeordnet sind, wobei die Öffnungen 34 und 38 auf einer Symmetrieachse des rechteckigen Versorgunsgbereichs 44a beziehungsweise 44b angeordnet sind. Das Flow-Field 30 wird durch eine äußere Umrandung 42 begrenzt, die stromlinienförmig ausgebildet ist, um einen möglichst laminaren, turbulenzfreien Strömungsverlauf im Flow-Field zu gewährleisten. Die Ausströmung des Gases 32 aus den Gasdurchtrittöffnungen 34 in die der aktiven Fläche 22 abgewandte Richtung vermindert drastisch das Risiko eines Gaskurzschlusses zwischen Eingangs- und Ausgangs-Gasdurchtrittöffnungen 34, 38. Die bereits erläuterte Geometrie der Gasdurchtrittöffnungen 34 und 38 bewirkt in Kombination mit den Gasströmungsbarrieren 36 und 40, dass sich über der aktiven Fläche eine gleichmäßige Gasverteilung einstellt, wie sie im Stand der Technik bei gleicher Größe der aktiven Fläche nur mit etwa doppelt so vielen Gasdurchtrittöffnungen erreicht werden kann. Die dargestellte erfindungsgemäße Geometrie bietet Vorteile aufgrund einer verringerten Anzahl von Dichtflächen, eines verringerten Platzbedarfs sowie eines nahezu ungehinderten Luftzutritts zu allen Bereichen der aktiven Fläche 22. Die zum Ableiten des Gases von der aktiven Fläche 22 vorgesehenen Gasdurchtrittöffnungen 38 haben weiterhin einen größeren Querschnitt als die zum Einleiten vorgesehenen Gasdurchtrittöffnungen 34, was ebenfalls eine gleichmäßigere Gasverteilung über die Wiederholeinheiten des Brennstoffzellenstapels unterstützt.

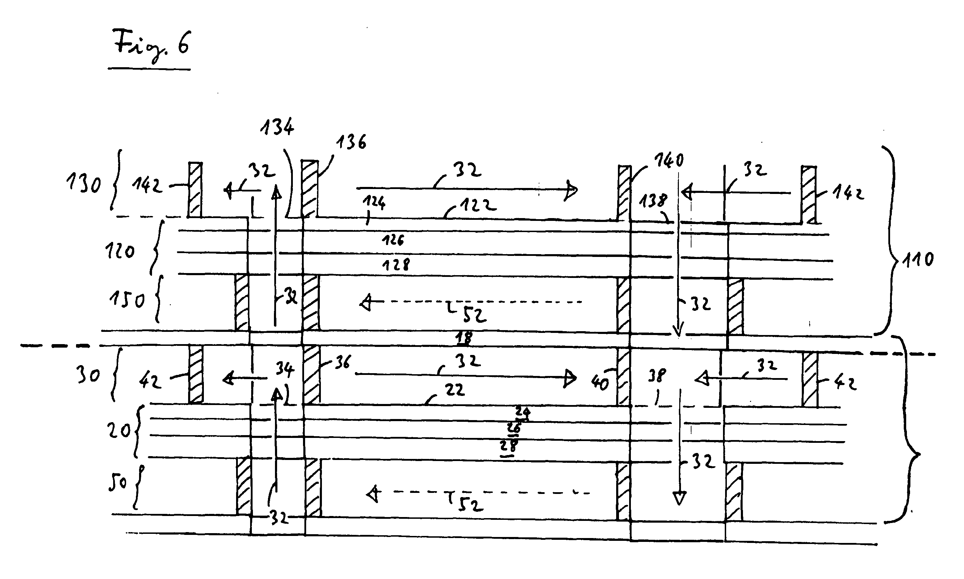

Figur 6 ist eine Schnittansicht entlang der oberen durchbrochenen Linie in Figur 5. Sie veranschaulicht einen möglichen vertikalen Aufbau eines erfindungsgemäßen Brennstoffzellenstapels, der mindestens zwei Wiederholeinheiten 10, 110 mit je einer Membranelektrodeneinheit (MEA) 20, 120 umfasst. Die erste Wiederholeinheit 10 wird von einer Bipolarplatte 18 abgedeckt, welche an die zweite Wiederholeinheit 110 anschließt. Die dargestellte-Ausführungsform ist so ausgelegt, dass Brenngas 32 die Wiederholeinheiten 10 und 110 jeweils in der gleichen Richtung (in der Zeichnung von links nach rechts) durchströmt. Jedoch ist auch eine Gegenstromanordnung (nicht dargestellt) technisch realisierbar. In der gezeigten Ausführungsform (Gleichstromanordnung) gelangt Brenngas 32 durch bereits erläuterte erfindungsgemäße Gasdurchtrittöffnungen 34, 134 in Flow-Fields 30, 130, welche bereits erläuterte erfindungsgemäße Gasströmungsbarrieren 36, 136 aufweisen, um das Brenngas 32 über die aktiven Flächen 22, 122 zu verteilen. Der nicht verbrannte Teil des Brenngases 32 sowie von den Anodenschichten 24, 124 abgeschiedenes Gas wird über bereits erläuterte, größere Gasdurchtrittöffnungen 38, 138 abgeleitet. Zwischen der Bipolarplatte 18 der ersten Wiederholeinheit 10 und der Kathodenschicht 128 der zweiten Wiederholeinheit 110 befindet sich ein dem bisherigen Stand der Technik entnommenes Flow-Field 150 zur Verteilung von Oxidationsgas/Luft 52, das hier nicht näher erläutert wird. Es ist jedoch auch ein Brennstoffzellenstapel denkbar, bei dem sowohl die Flow-Fields zur Verteilung des Brenngases als auch die Flow-Fields zur Verteilung des Oxidationsgases oder nur letztere der vorliegenden Erfindung entsprechend ausgestaltet sind.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichen:

- 8.: Brennstoffzellenstapel
- 10: Wiederholeinheit
- 20: Membranelektrodeneinheit (MEA)
- 22: aktive Fläche
- 24: Anodenschicht
- 26: Elektrolytmembran
- 28: Kathodenschicht
- 30: Flow-Field
- 32: Brenngas
- 34: Gasdurchtrittöffnung
- 36: Gasströmungsbarriere
- 38: Gasdurchtrittöffnung
- 40: Gasströmungsbarriere
- 42: Umrandung
- 44: Versorgungsbereich
- 50: Flow-Field
- 52: Oxidationsgas
- 110: Wiederholeinheit
- 120: Membranelektrodeneinheit (MEA)
- 122: aktive Fläche
- 124: Anodenschicht
- 126: Elektrolytmembran
- 128: Kathodenschicht
- 130: Flow-Field
- 132: Brenngas
- 134: Gasdurchtrittöffnung
- 136: Gasströmungsbarriere
- 138: Gasdurchtrittöffnung
- 140: Gasströmungsbarriere
- 142: Umrandung
- 150: Flow-Field

## Patentansprüche

1. Wiederholeinheit (10) für einen Brennstoffzellenstapel (8), mit einer Membranelektrodeneinheit (20) und einem Flow-Field (30), das ausgelegt ist, eine aktive Fläche (22) der Membranelektrodeneinheit (20) mit Gas (32) zu versorgen, und das zumindest eine Gasdurchtrittöffnung (34; 38) aufweist, wobei zwischen der aktiven Fläche (22) und der Gasdurchtrittöffnung (34; 38) eine gasdichte Gasströmungsbarriere (36; 40) vorgesehen ist, so dass Gas (32), das durch die Gasdurchtrittöffnung (34; 38) tritt, die Gasströmungsbarriere (36; 40) vor dem Erreichen oder nach dem Verlassen der aktiven Fläche umströmt, **dadurch gekennzeichnet, dass** die Projektion der Gasströmungsbarriere (36; 40) auf den Rand der aktiven Fläche (22) mindestens halb so lang wie die Projektion der Gasdurchtrittöffnung (34; 38) auf den Rand der aktiven Fläche (22) ist.

2. Wiederholeinheit (10) nach Anspruch 1, **dadurch gekennzeichnet, dass** sich die Gasströmungsbarriere (36; 40) in Richtung zur aktiven Fläche (22) verjüngt.

3. Wiederholeinheit (10) nach Anspruch 2, **dadurch gekennzeichnet, dass** die Gasströmungsbarriere (36; 40) im wesentlichen die Form und Ausrichtung eines "V" oder "U" hat, dessen Öffnung der aktiven Fläche (22) abgewandt ist.

4. Wiederholeinheit (10) nach einem der vorhergehenden Ansprüche, **dadurch gekennzeichnet, dass** sich die Gasdurchtrittöffnung (34; 38) in Richtung zur aktiven Fläche (22) verjüngt.

5. Wiederholeinheit (10) nach Anspruch 4, **dadurch gekennzeichnet, dass** die Gasdurchtrittöffnung (34; 38) im Wesentlichen die Form eines Dreiecks mit abgerundeten Ecken hat.

6. Wiederholeinheit (10) nach einem der vorhergehenden Ansprüche, **dadurch gekennzeichnet, dass** die Gasdurchtrittöffnung (34) zum Zuführen von Gas (32) an die aktive Fläche (22) ausgelegt ist und das Flow-Field (30) eine zweite Gasdurchtrittöffnung (38) zum Abführen von Gas (32) von der aktiven Fläche (22) aufweist, wobei zwischen der aktiven Fläche (22) und der zweiten Gasdurchtrittöffnung (38) eine gasdichte zweite Gasströmungsbarriere (40) vorgesehen ist, so dass Gas (32), das durch die zweite Gasdurchtrittöffnung (38) tritt und zumindest über einen Teil der aktiven Fläche (22) geströmt ist, die zweite Gasströmungsbarriere (40) umströmt, wobei die Projektion der zweiten Gasströmungsbarriere (40) auf den Rand der aktiven Fläche (22) mindestens halb so lang wie die Projektion der zweiten Gasdurchtrittöffnung (38) auf den Rand der aktiven Fläche (22) ist.

7. Wiederholeinheit (10) nach Anspruch 5, **dadurch gekennzeichnet, dass** die zum Abführen des Gases (32) vorgesehene zweite Gasdurchtrittöffnung (38) eine größere Querschnittsfläche als die zum Zuführen des Gases (32) vorgesehene erste Gasdurchtrittöffnung (34) hat.

8. Wiederholeinheit (10) nach Anspruch 4 oder 5, **dadurch gekennzeichnet, dass** die aktive Fläche (22) im Wesentlichen rechteckig ist und in einen oder mehrere im Wesentlichen rechteckige Versorgungsbereiche (44) aufgeteilt ist, wobei jedem Versorgungsbereich (44) eine erste Gasdurchtrittöffnung (34) zum Zuführen von Gas (32) und eine zweite Gasdurchtrittöffnung (38) zum Abführen von Gas (32) zugeordnet sind.

9. Wiederholeinheit (10) nach Anspruch 8, **dadurch gekennzeichnet, dass** die erste Gasdurchtrittöffnung (34) und die zweite Gasdurchtrittöffnung (38) auf einer Mittelachse des ihnen zugeordneten Versorgungsbereiches (44) angeordnet sind.

10. Wiederholeinheit (10) nach einem der vorhergehenden Ansprüche, **dadurch gekennzeichnet, dass** die äußere Umrandung (42) des Flow-Fields (30) stromlinienförmig ausgelegt ist.

11. Brennstoffzellenstapel (8), **dadurch gekennzeichnet, dass** er mindestens eine Wiederholeinheit (10) nach einem der vorhergehenden Ansprüche aufweist.

## Claims

1. A repeating unit (10) for a fuel cell stack (8); the repeating unit (10) comprises a membrane electrode assembly (20) and a flow field (30); the flow field (30) is designed to supply an active surface (22) of the membrane electrode assembly (20) with gas (32) and comprises at least one gas passage orifice (34; 38); a gas-tight gas flow barrier (36; 40) is provided between the active surface (22) and the gas passage orifice (34; 38) so that gas (32) passing through the gas passage orifice (34; 38) flows around the gas flow barrier (36; 40) before reaching or after leaving the active surface; **characterised in that** the projection of the gas flow barrier (36; 40) onto the periphery of the active surface (22) is at least half as long as the projection of the gas passage orifice (34; 38) onto the periphery of the active surface (22).

2. The repeating unit (10) according to claim 1, **characterised in that** the gas flow barrier (36; 40) is tapered in the direction towards the active surface (22).

3. The repeating unit (10) according to claim 2, **characterised in that** the gas flow barrier (36; 40) has, substantially, the shape and orientation of a "V" or "U" the opening of which is opposed to the active surface (22).

4. The repeating unit (10) according to one of the preceding claims, **characterised in that** the gas passage orifice (34; 38) is tapered in direction towards the active surface (22).

5. The repeating unit (10) according to claim 4, **characterised in that** the gas passage orifice (34; 38) has, substantially, the shape of a triangle with rounded corners.

6. The repeating unit (10) according to one of the preceding claims, **characterised in that** the gas passage orifice (34) is designed for supplying gas (32) to the active surface (22) and the flow field (30) comprises a second gas passage orifice (38) for discharging gas (32) from the active surface (22), wherein a gas-tight second gas flow barrier (40) is provided between the active surface (22) and the second gas passage orifice (38) so that gas (32) entering through the second gas passage orifice (38) and having flown over at least a part of the active surface (22) flows around the second gas flow barrier (40), wherein the projection of the second gas flow barrier (40) to the periphery of the active surface (22) is at least half as long as the projection of the second gas passage orifice (38) onto the periphery of the active surface (22).

7. The repeating unit (10) according to claim 5, **characterised in that** the second gas passage orifice (38) provided for discharging the gas (32) has a larger cross sectional area than the first gas passage orifice (34) provided for supplying the gas (32).

8. The repeating unit (10) according to claim 4 or 5, **characterised in that** the active surface (22) is substantially rectangular and divided into one or more substantially rectangular supply areas (44), wherein a first gas passage orifice (34) for supplying gas (32) and a second gas passage orifice (38) for discharging gas (32) are allocated to each supply area (44).

9. The repeating unit (10) according to claim 8, **characterised in that** the first gas passage orifice (34) and the second gas passage orifice (38) are disposed on a central axis of the supply area (44) allocated to them.

10. The repeating unit (10) according to one of the preceding claims, **characterised in that** the outer fringe (42) of the flow field (30) is streamlined.

11. A fuel cell stack (8), **characterised in that** it comprises at least one repeating unit (10) according to one of the preceding claims.

## Revendications

1. Unité répétitive (10) pour un bloc de piles à combustible (8), comportant une unité membrane électrode (20) et un champ d'écoulement (30) qui est adapté à alimenter une zone active (22) de l'unité membrane électrode (20) avec du gaz (32) et qui comporte au moins un orifice passage de gaz (34; 38); une barrière d'écoulement de gaz (36; 40) qui est étanche pour du gaz et prévue entre la zone active (22) et l'orifice passage de gaz (34; 38) de sorte que du gaz (32) qui passe à travers l'orifice passage de gaz (34; 38) coule au tour de la barrière d'écoulement de gaz (36; 40) avant d'atteindre ou après avoir quitté la zone active, **caractérisée en ce que** la projection de la barrière d'écoulement de gaz (36; 40) sur le bord de la zone active (22) possède une longueur qui vaut au moins la moitié de la projection de l'orifice passage de gaz (34; 38) sur le bord de la zone active (22).

2. Unité répétitive (10) selon la revendication 1, **caractérisée en ce que** la barrière d'écoulement de gaz (36; 40) se rétrécit vers la zone active (22).

3. Unité répétitive (10) selon la revendication 2, **caractérisée en ce que** la barrière d'écoulement de gaz (36; 40) a essentiellement la forme et l'orientation d'un "V" ou d'un "U" dont l'ouverture est détourné de la zone active (22).

4. Unité répétitive (10) selon l'une des revendications précédentes, **caractérisée en ce que** l'orifice passage de gaz (34; 38) se rétrécit vers la zone active (22).

5. Unité répétitive (10) selon la revendication 4, **caractérisée en ce que** l'orifice passage de gaz (34; 38) a essentiellement la forme d'un triangle avec des angles arrondis.

6. Unité répétitive (10) selon l'une des revendications précédentes, **caractérisée en ce que** l'orifice passage de gaz (34; 38) est conçu pour acheminer du gaz (32) vers la zone active (22) et le champ d'écoulement (30) comporte un deuxième orifice de passage de gaz (38) pour extraire du gaz (32) de la zone active (22), une deuxième barrière d'écoulement de gaz (40) étant prévu entre la zone active (22) et le deuxième orifice passage de gaz (38) qui est étanche pour du gaz, de sorte que du gaz (32) passant par le deuxième orifice passage de gaz (38) et qui a coulé à travers au moins une partie de la zone active (22) coule autour de la deuxième barrière d'écoulement de gaz (40), la projection de la deuxième barrière d'écoulement de gaz (40) sur le bord de la zone active (22) ayant une longueur qui vaut au moins la moitié de la projection du deuxième orifice passage de gaz (38) sur le bord da la zone active (22).

7. Unité répétitive (10) selon la revendication 5, **caractérisée en ce que** le deuxième orifice passage de gaz (38), qui est prévu pour extraire du gaz (32), comporte une section transversale qui est plus grande que le premier orifice passage de gaz (34) prévu pour acheminer le gaz (32).

8. Unité répétitive (10) selon la revendication 4 ou 5, **caractérisée en ce que** la zone active (22) est essentiellement rectangulaire et divisée entre une ou plusieurs zones d'alimentation (44) essentiellement rectangulaires, un premier orifice passage de gaz (34) pour acheminer du gaz (32) et un deuxième orifice passage de gaz (38) pour extraire du gaz (32) étant attribués à chaque zone d'alimentation (44).

9. Unité répétitive (10) selon la revendication 8, **caractérisée en ce que** le premier orifice passage de gaz (34) et le deuxième orifice passage de gaz (38) sont agencés sur un axe central de la zone d'alimentation (44) qui leur est attribué.

10. Unité répétitive (10) selon l'une des revendications précédentes, **caractérisée en ce qu'**un contour extérieur (42) du champ d'écoulement (30) est caréné.

11. Bloc de pile à combustible (8) **caractérisée en ce qu'**il comporte au moins une unité répétitive (10) selon l'une des revendications précédentes.
